# EUROPÄISCHE PATENTSCHRIFT

(11) **EP 1 202 880 B1**
(45) Veröffentlichungstag und Bekanntmachung des Hinweises auf die Patenterteilung: **12.11.2003**
(21) Anmeldenummer: 00958447.5
(22) Anmeldetag: 15.08.2000
(51) Int. Cl.: B60R 21/26

(54) **KRAFTFAHRZEUG-GASSACKANORDNUNG MIT SCHNURGASGENERATOR**
MOTOR VEHICLE AIR BAG SYSTEM WITH A CABLE-TYPE GAS GENERATOR
ENSEMBLE SAC A GAZ (AIRBAG) AVEC GENERATEUR DE GAZ DU TYPE CORDEAU POUR VEHICULE AUTOMOBILE

(30) Priorität: 16.08.1999 DE 19938726
(43) Veröffentlichungstag der Anmeldung: 08.05.2002
(73) Patentinhaber: AUTOLIV DEVELOPMENT AB, 447 83 Vargarda (SE)
(72) Erfinder: HERRMANN, Günter, 83620 Feldkirchen (DE); LANG, Rüdiger, 84539 Ampfing (DE)
(74) Vertreter: Müller, Karl-Ernst, Dr., Dipl.-Ing.
(86) Internationale Anmeldenummer: EP0007939
(87) Internationale Veröffentlichungsnummer: WO01012475

(56) Entgegenhaltungen:
- DE-A- 4 116 882
- DE-A- 4 305 291
- DE-A- 19 816 061
- DE-C- 4 134 995

## Beschreibung

Die Erfindung betrifft eine Gassackanordnung für ein Kraftfahrzeug entweder in der Form eines aus mehreren aufblasbaren Kammern bestehenden Beifahrerairbags oder in der Form eines sich über wenigstens einen Teilabschnitt der Fahrzeugseite aus einem in dem Dachholm angeordneten Modul entfaltenden und aus mehreren aufblasbaren Kammern bestehenden Gassackvorhang.

Derartige Gassackanordnungen sind in unterschiedlichen Ausführungsformen in einem Kraftfahrzeug als sogenannter Fahrerairbag bzw. Beifahrerairbag (entsprechend DE 196 20 537 A1) oder als im Seitenbereich eines Kraftfahrzeuges angeordneter Gassackvorhang (Curtain) (entsprechend DE 198 16 061) bekannt. Bei den bekannten Gassackanordnungen ist ein pyrotechnisch arbeitender Gasgenerator zur Erzeugung des für das Aufblasen der einzelnen aufblasbaren Kammern der Gassackanordnung notwendigen Gases vorgesehen, von dem aus das Gas in die einzelnen Kammern strömt bzw. ggf. durch Leitanordnungen geleitet wird. Daraus ergibt sich der Nachteil, daß nach Auslösung des Gasgenerators sich das von diesem erzeugte Gas zunächst bis in die aufblasbaren Kammern der Gassackanordnung verteilen muß, so daß die einzelnen Kammern der Gassackanordnung mit einem wenn auch geringen zeitlichen Abstand aufgeblasen werden. Hierdurch läuft der Aufblasvorgang in nachteiliger Weise auch entsprechend langsam ab. Als weiterer Nachteil ist zu nennen, daß aufgrund der für das Aufblasen des Gassackvorhanges vergleichsweise großen, zentral erzeugten Gasmenge der beim Aufblasen des Gassackvorhanges erzeugte Schalldruck sehr hoch ist.

Der Erfindung liegt daher die Aufgabe zugrunde, bei einer Gassackanordnung mit den gattungsgemäßen Merkmalen ein gleichmäßiges und schonendes wie auch schnelles Aufblasen der Kammern der Gassackanordnung einzurichten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht für die beiden unterschiedlichen Ausführungsbeispiele in ihrem Grundgedanken vor, daß einzelnen Kammern der Gassackanordnung ein gesonderter Schnurgaserzeuger als Gasgenerator zugeordnet und von einem zentralen Initiator strangweise in die jeweils aufblasbare Kammer der Gassackanordnung geführt ist. Der Aufbau eines derartigen Schnurgaserzeugers ist beispielsweise aus der DE 39 32 576 C1 bekannt.

Aus der DE 43 05 291 A1 ist bereits ein airbagbestückter Sicherheitsgurt für einen Fahrzeuginsassen bekannt, bei dem auf beiden Seiten des textilen Gurtbandes jeweils ein aufblasbarer Schlauch als Airbag angebracht bzw. mit dem Gurt integriert ist, wobei in dem aufblasbaren Airbag eine oder mehrere Zündschnüre als Schnurgasgeneratoren verlaufen, die über einen beispielsweise im Aufrollautomaten angeordneten Schleifkontakt gezündet werden. Das durch das Abbrennen der Zündschnüre entstehende Gas bläst dabei die auf den beiden Seiten des Gurtbandes angeordneten Airbags auf. Bei einem Seitenaufprallschutzsystem mit in der Längsrichtung des Fahrzeuges matratzenförmig angeordneten Kammern ist ein Schnurgasgenerator durchgängig und mäanderförmig durch die nebeneinanderliegenden röhrenförmigen Kammern geführt, so daß beim Abbrennen des Schnurgasgenerators die Kammern nacheinander aufgeblasen werden.

Mit der Erfindung ist der Vorteil verbunden, daß das Gas über die in die aufzublasenden Kammern der Gassackanordnung reichenden Schnurgaserzeuger unmittelbar in den Bereichen der Gassackanordnung erzeugt wird, in denen das Gas benötigt wird. Mit einer derartigen dezentralen Gaserzeugung wird nicht nur eine gleichmäßige und gleichzeitige Entfaltung aller Kammern der Gassackanordnung erreicht, sondern es wird auch der auftretende Schalldruck vermindert. Dabei wird aufgrund des schonenden Aufblasens der Gassackanordnung das eingesetzte Gassackgewebe weniger beansprucht. Schließlich ist es in vorteilhafter Weise möglich, die Gassackanordnung gemeinsam mit den darin bereits verlegten Schnurgaserzeugern für die Unterbringung im Kraftfahrzeug zu falten bzw. einzurollen.

Soweit die Erfindung auf eine Gassackanordnung in der Form eines aus mehreren Kammern bestehenden Beifahrerairbags gerichtet ist, ist vorgesehen, daß der Initiator in dem Armaturenbrett des Kraftfahrzeuges angeordnet und die den einzelnen aufblasbaren Kammern zuzuordnenden Schnurgaserzeuger in ihrem vom Initiator wegführenden Bereich durch Verbindungsmittel zu einem gemeinsamen Strang zusammengehalten sind und am Anschluß jeder einzelnen Kammer der zugehörige Schnurgaserzeuger von dem Strang abgezweigt und in die Kammer geführt ist. Hiermit ist die vorteilhafte Wirkung verbunden, daß abhängig von der Länge des jeweiligen Schnurgaserzeugers sowie auch von der Positionierung der Ausströmöffnungen in der einen Bestandteil des Schnurgaserzeugers bildenden Hülle der Druck in den jeweiligen aufblasbaren Kammern des Beifahrerairbags beeinflußt werden kann.

In einer anderen Ausführungsform ist die Erfindung auf eine Gassackanordnung in der Form eines sich über wenigstens einen Teilabschnitt der Fahrzeugseite aus einem in dem Dachholm angeordneten Modul entfaltenden und aus mehreren, an einen mit einem Gasgenerator verbundenen Gaszuführungskanal angeschlossenen aufblasbaren Kammern bestehenden Gassackvorhang gerichtet; ein derartiger Gassackvorhang ist aus der DE 198 16 061 A1 bekannt.

Hierbei ist in einer ersten Ausführungsform vorgesehen, daß die den einzelnen aufblasbaren Kammern des Gassackvorhanges zugeordneten Schnurgaserzeuger in ihrem von einem zentral angeordneten Initiator wegführenden und in dem Gasführungskanal verlaufenden Bereich durch Verbindungsmittel zu einem gemeinsamen Strang zusammengefaßt sind und am Anschluß jeder einzelnen Kammer an dem Gaszuführungskanal der zugehörige Schnurgaserzeuger von dem Strang abgezweigt und in die Kammer geführt ist.

In einer abgewandelten Ausführungsform kann bei einem Gassackvorhang auch vorgesehen sein, daß in dem Gaszuführungskanal ein zentraler sich längs des Gaszuführungskanals erstreckender Schnurgaserzeuger eingesetzt ist, von dem aus sich über Abzweigungen angeschlossene weitere Schnurgaserzeugerabschnitte in die einzelnen aufblasbaren Kammern des Gassackvorhanges erstrecken. Zur Ausgestaltung der erforderlichen Abzweigungen kann vorgesehen sein, daß an den Abzweigungen jeweils eine T-förmige Hülse angeordnet ist, die mit ihren beiden fluchtenden Schenkeln über den zentralen Schnurgaserzeuger gestülpt ist und in deren T-Stutzen jeweils der Schnurgaserzeugerabschnitt eingeführt und in der Hülse festgelegt ist.

Im Einzelfall kann in jede einzelne aufzublasende Kammer ein Schnurgasgenerator verlegt sein, es kann aber auch ausreichend sein, jeweils nur in einen Teil der jeweils aufzublasenden Kammern einen Schnurgasgenerator einzuführen.

Um bei der Ausgestaltung der Gassackanordnung als Gassackvorhang eine längere Standzeit des aufgeblasenen Gassackvorhanges sicherzustellen, ist vorgesehen, daß ein zusätzlicher Kaltgasgenerator bestehend aus einem mit einer Öffnungsvorrichtung versehenen Druckbehälter mit einem darin gespeicherten Gasvorrat vorgesehen ist, der mit einer zeitlichen Verzögerung gegenüber dem Abbrennen des Schnurgaserzeugers freigegeben wird. Soweit das vom Schnurgaserzeuger erzeugte Gas aufgrund seiner Abkühlung an Volumen verliert, fördert der Kaltgasgenerator nach seiner Auslösung eine entsprechende Gasmenge nach, so daß die Standzeit des aufgeblasenen Gassackvorhanges verlängert ist. Die Kombination einer pyrotechnischen Gaserzeugung mit einem Kaltgasgenerator ist beispielsweise in der DE 197 53 074 C1 offenbart; allerdings wird dabei gleichzeitig mit der pyrotechnischen Gaserzeugung auch das bevorratete Kaltgas freigegeben, um die Temperatur des auf pyrotechnischem Wege erzeugten Heißgases zu reduzieren.

Nach einem Ausführungsbeispiel der Erfindung ist vorgesehen, daß die Öffnungsvorrichtung des Druckbehälters über eine Zeitschaltvorrichtung aktiviert wird. Alternativ kann vorgesehen sein, daß die Aktivierung der Öffnungsvorrichtung unmittelbar durch den sich entfaltenden Gassackvorhang erfolgt, indem die Öffnungsvorrichtung des Druckbehälters mit dem sich entfaltenen Gassackvorhang verbunden ist. Diese Verbindung kann nach einem Ausführungsbeispiel dadurch verwirklicht sein, daß der untere freie Rand des sich entfaltenden Gassackvorhangs über eine Reißleine mit der Öffnungsvorrichtung verbunden ist.

In der Zeichnung ist sind Ausführungsbeispiele der Erfindung wiedergegeben, welches nachstehend beschrieben sind. Es zeigen:
- Fig. 1: eine als Beifahrerairbag ausgebildete Gassackanordnung in einer schematischen Darstellung
- Fig. 2: die Seitenpartie eines Kraftfahrzeuges in einer Ansicht,
- Fig. 3: einen sich vor der Seitenpartie gemäß Fig. 2 entfaltenden Gassackvorhang in Seitenansicht.
- Fig. 4: den Gassackvorhang gemäß Fig. 3 in einer anderen Ausführungsform,
- Fig. 5: die bei dem Ausführungsbeispiel in Fig. 4 vorgesehenen Abzweigungen in einer vergrößerten Einzeldarstellung.

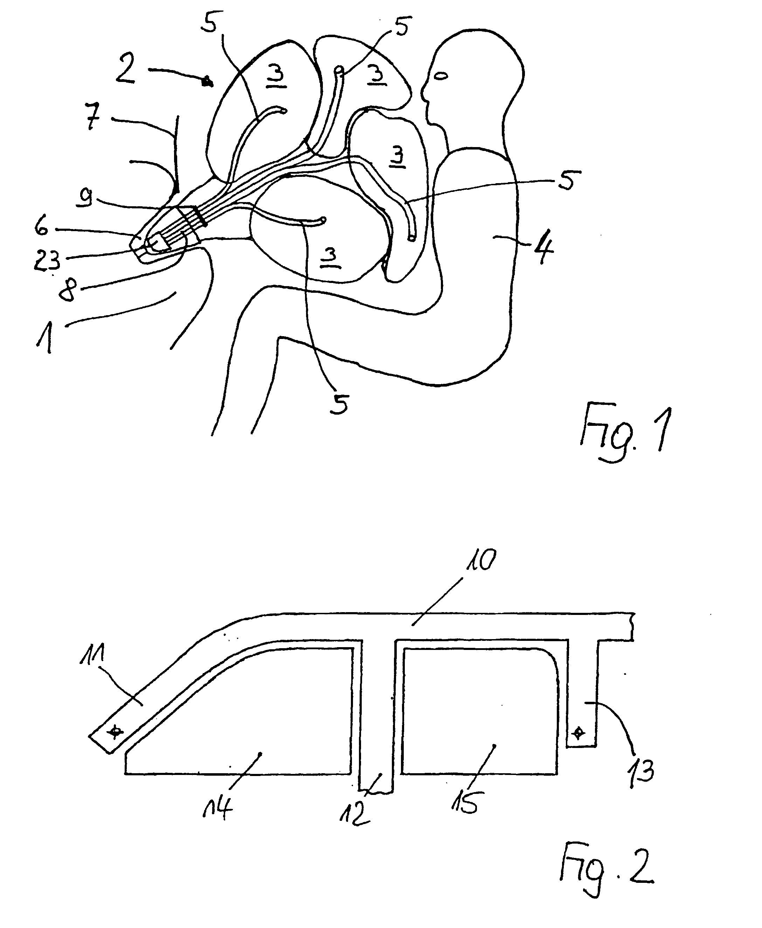

Bei dem in Fig. 1 dargestellten und eine Gassackanordnung in der Form eines Beifahrerairbags zeigenden Ausführungsbeispiel ist mit dem Bezugszeichen 1 das Armaturenbrett eines Kraftfahrzeuges bezeichnet, in dessen Einbauraum 6 bei nicht ausgelöster Gassackanordnung ein Beifahrerairbag 2 eingefaltet ist; der Einbauraum 6 ist durch eine Abdeckklappe 7 verschlossen. In der Darstellung der Fig. 1 ist der Beifahrerairbag 2 aus dem Einbauraum 6 heraus entfaltet und aufgeblasen, so daß die Abdeckklappe 7 aufgeschwenkt ist und sich der Beifahrerairbag 2 schützend vor den Fahrzeuginsassen 4 entfaltet hat. Der Beifahrerairbag 2 besteht aus einzelnen aufzublasenden Kammern 3, wobei jeder aufzublasenden Kammer 3 ein gesonderter Schnurgaserzeuger 5 zugeordnet ist. Die den einzelnen Kammern 3 zugeordneten Schnurgaserzeuger 5 sind gemeinsam zu einem zentral in dem Einbauraum 6 des Armaturenbretts 1 angeordneten Initiator 23 geführt und im Bereich des Einbauraumes 6 zunächst durch eine Schelle 9 zu einem Strang 8 zusammengefaßt. Von diesem Strang 8 sind dann entsprechend dem Anschluß der einzelnen Kammern 3 jeweils die einzelnen Schnurgaserzeuger 5 für jede der aufblasbaren Kammern 3 abgezweigt.

In den Fig. 2 bis 5 ist ein Ausführungsbeispiel der Erfindung darsgestellt, bei welchem die Gassackanordnung als sogenannter Seitenairbag bzw. Curtain mit einem sich vor dem Seitenbereich des Kraftfahrzeuges entfaltenden Gassackvorhang ausgebildet ist.

Die zunächst in Fig. 2 dargestellte Seitenpartie eines Kraftfahrzeuges besteht aus den in Fahrtrichtung des Kraftfahrzeuges hintereinander liegenden, einen Dachholm 10 tragenden Säulen, wobei mit 11 die sogenannte A-Säule, mit 12 die sogenannte B-Säule und mit 13 eine vorgesehene C-Säule bezeichnet sind. Die vordere Seitenscheibe ist mit 14 gekennzeichnet und die hintere Seitenscheibe mit 15.

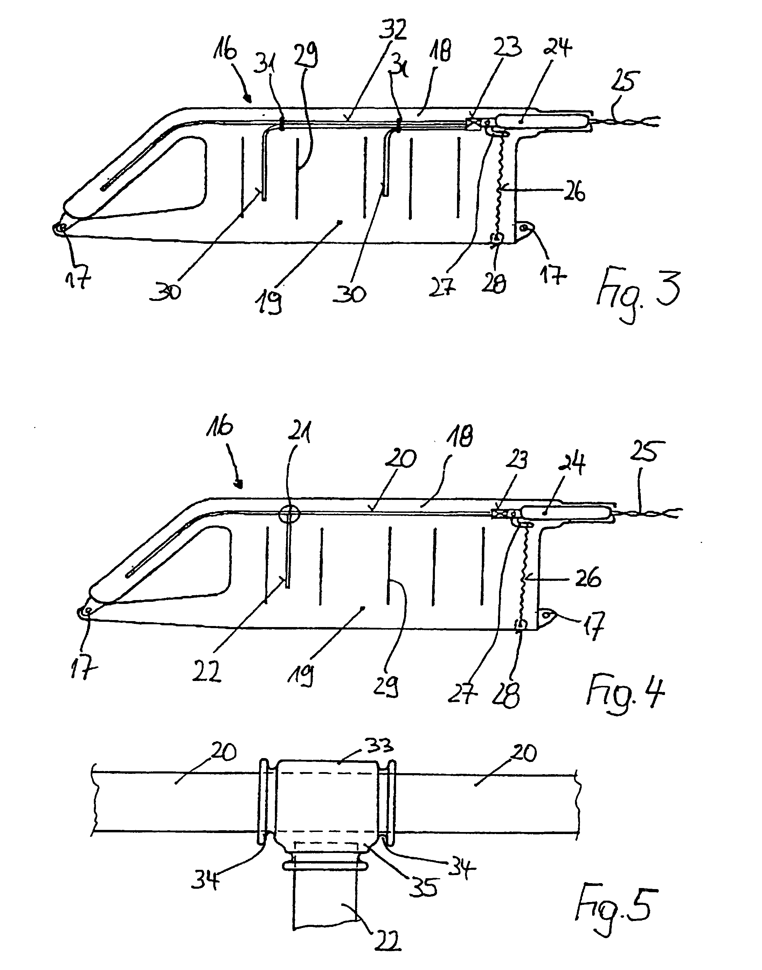

Der in Fig. 3 und 4 im einzelnen dargestellte Gassackvorhang 16 ist an Befestigungspunkten 17 einerseits mit der A-Säule 11 und andererseits mit der C-Säule 13 verbunden. Längs des Dachholmes 10 ist im oberen Bereich des Gassackvorhanges 16 ein Gaszuführungskanal 18 ausgebildet, von dem aus durch mit 29 schematisch angedeutete Abnäher getrennte vertikale Kammern 19 ihren Ausgang nehmen.

Bei dem in Fig. 3 dargestellten Ausführungsbeispiel sind in Anlehnung an die zu Fig. 1 beschriebene Gassackanordnung einzelne zwischen dem im Dachholm 10 angeordneten Initiator 23 und den einzelnen aufblasbaren Kammern 19 des Gassackvorhanges 16 bis in die aufblasbaren Kammrn 19 reichende Schnurgaserzeuger 30 angeordnet, die im Bereich des Gaszuführungskanals 18 mittels entsprechend angeordneter Schellen 31 zu einem Strang 32 zusammengefaßt sind. An jedem Anschluß einer aufblasbaren Kammer 19 an den Gaszuführungskanal 18 zweigt der zugehörige Schnurgaserzeuger 30 von dem Strang 32 ab und erstreckt sich bis in die zugeordnete Kammer 19.

Bei dem in Fig. 4 dargestellten Ausführungsbeispiel ist zur Gaserzeugung in dem Gassackvorhang 16 zunächst ein zentraler Schnurgaserzeuger 20 verlegt. Der Schnurgaserzeuger 20 ist in dem Gaszuführungskanal 18 angeordnet, wobei über Abzweigungen 21 angeschlossene weitere Schnurgaserzeugerabschnitte 22 in die einzelnen Kammern 19 geführt sind. An seinem im Bereich der C-Säule 13 angeordneten Ende ist der Schnurgaserzeuger 20 an einen Initiator 23 angeschlossen, der über einen über die Zuleitungen 25 übermittelten Zündimpuls gezündet werden kann.

In Fig. 5 ist ein Ausführungsbeispiel dargestellt, wie die Abzweigungen 21 ausgebildet sein können. Hierzu ist eine T-förmige Hülse 33 mit ihren fluchtenden Schenkeln 34 über den zentralen Schnurgaserzeuger 20 gestülpt, wobei in den T-Stutzen 35 der in der zugeordneten Kammer 19 des Gassackvorhanges 16 angeordnete Schnurgaserzeugerabschnitt 22 eingeführt und in der Hülse 33 festgelegt ist. Die Festlegung kann in Form einer Pressverbindung erfolgen.

Bei den Ausführungsbeispielen gemäß Figuren 3 und 4 ist zusätzlich zu dem jeweiligen Schnurgaserzeuger an den Gaszuführungskanal 18 ein Kaltgasgenerator mit einem Druckbehälter 24 angeschlossen, in welchem unter Druck Gas bevorratet ist. Der Druckbehälter 24 weist eine Öffnungsvorrichtung 27 auf, die über eine Reißleine 26 mit dem unteren freien Rand 28 des Gassackvorhanges 16 verbunden ist.

Im Unfallgeschehen erfolgt zunächst über den Initiator 23 eine Zündung der Schnurgaserzeugers 30 bzw. 20 nebst daran angeschlossener Abschnitte 22, wobei aufgrund des Aufbaus der Schnurgaserzeuger 30 bzw. 20, 22 ein fast gleichzeitiges Abbrennen der Schnurgaserzeuger 30 bzw. 20, 22 erfolgt. Hierdurch erfolgt eine sehr schnelle und gleichmäßige Entfaltung des Gasvorhanges 16. Am Ende dieses Entfaltungsvorganges spannt der untere freie Rand 28 des Gassackvorhanges 16 die Reißleine 26, so daß hierdurch die Öffnungsvorrichtung 27 des Druckbehälters 24 aktiviert wird und das in dem Druckbehälter 24 gespeicherte Gas ausströmen kann.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Gassackanordnung für ein Kraftfahrzeug in der Form eines aus mehreren aufblasbaren Kammern (3) bestehenden Beifahrerairbags (2), **dadurch gekennzeichnet, daß** einzelnen Kammern (3) der Gassackanordnung ein gesonderter Schnurgaserzeuger (5) als Gasgenerator zugeordnet und von einem zentralen Initiator (23) strangweise in die jeweils aufblasbare Kammer (3) der Gassackanordnung geführt ist.

2. Gassackanordnung nach Anspruch 1, **dadurch gekennzeichnet, daß** der Initiator (23) in dem Armaturenbrett (1) des Kraftfahrzeuges angeordnet und die den einzelnen aufblasbaren Kammern (3) zuzuordnenden Schnurgaserzeuger (5) in ihrem vom Initiator (23) wegführenden Bereich durch Verbindungsmittel (9) zu einem gemeinsamen Strang (8) zusammengehalten sind und am Anschluß jeder einzelnen Kammer (3) der zugehörige Schnurgaserzeuger (5) von dem Strang (8) abgezweigt und in die Kammer (3) geführt ist.

3. Gassackanordnung in der Form eines sich über wenigstens einen Teilabschnitt der Fahrzeugseite aus einem in dem Dachholm (10) angeordneten Modul entfaltenden und aus mehreren aufblasbaren Kammern (19) bestehenden Gassackvorhang (16), **dadurch gekennzeichnet, daß** einzelnen Kammern (19) der Gassackanordnung ein gesonderter Schnurgaserzeuger (22, 30) als Gasgenerator zugeordnet und von einem zentralen Initiator (23) strangweise in die jeweils aufblasbare Kammer (19) der Gassackanordnung geführt ist.

4. Gassackanordnung nach Anspruch 3, **dadurch gekennzeichnet, daß** die den einzelnen aufblasbaren Kammern (19) des Gassackvorhanges (16) zugeordneten Schnurgaserzeuger (30) in ihrem von einem zentral angeordneten Initiator (23) wegführenden und in einem Gasführungskanal (18) verlaufenden Bereich durch Verbindungsmittel (32) zu einem gemeinsamen Strang (31) zusammengefaßt sind und am Anschluß jeder einzelnen Kammer (19) an dem Gaszuführungskanal (18) der zugehörige Schnurgaserzeuger (30) von dem Strang (31) abgezweigt und in die Kammer (19) geführt ist.

5. Gassackanordnung nach Anspruch 3, **dadurch gekennzeichnet, daß** in einem Gaszuführungskanal (18) ein zentraler sich längs des Gaszuführungskanals (18) erstreckender Schnurgaserzeuger (20) eingesetzt ist, von dem aus sich über Abzweigungen (21) angeschlossene weitere Schnurgaserzeugerabschnitte (22) in die einzelnen aufblasbaren Kammern (19) des Gassackvorhanges (16) erstrecken.

6. Gassackanordnung nach Anspruch 5, **dadurch gekennzeichnet, daß** an den Abzweigungen (21) jeweils eine T-förmige Hülse angeordnet ist, die mit ihren beiden fluchtenden Schenkeln (34) über den zentralen Schnurgaserzeuger (20) gestülpt ist und in deren T-Stutzen (35) jeweils der Schnurgaserzeugerabschnitt (22) eingeführt und in der Hülse (33) festgelegt ist.

7. Gassackanordnung nach einem der Anspruch 4 bis 6, **dadurch gekennzeichnet, daß** ein zusätzlicher Kaltgasgenerator bestehend aus einem mit einer öffnungsvorrichtung (27) versehenen Druckbehälter (24) mit einem darin gespeicherten Gasvorrat vorgesehen ist, der mit einer zeitlichen Verzögerung gegenüber dem Abbrennen des Schnurgaserzeugers (20, 22) freigegeben wird.

8. Gassackanordnung nach Anspruch 7, **dadurch gekennzeichnet, daß** die Öffnungsvorrichtung (27) des Druckbehälters (24) über eine Zeitschaltvorrichtung aktiviert wird.

9. Gassackanordnung nach Anspruch 7, **dadurch gekennzeichnet, daß** die öffnungsvorrichtung (27) des Druckbehälters (24) mit dem sich entfaltenden Gassackvorhang (16) derart verbunden ist, daß der aufgeblasene Gassackvorhang (16) die Öffnungsvorrichtung (27) aktiviert.

10. Gassackanordnung nach Anspruch 9, **dadurch gekennzeichnet, daß** der untere freie Rand (28) des sich entfaltenden Gassackvorhangs (16) über eine Reißleine (26) mit der Öffnungsvorrichtung (27) verbunden ist.

## Claims

1. Airbag arrangement for a motor vehicle in the form of a passenger airbag (2) that is comprised of a plurality of chambers (3), **characterized in that** a separate cord-type gas generator (5) is associated as a gas generator with the individual chambers (3) of the airbag arrangement and is guided from a central initiator (23) in the form of a strand into the respective inflatable chamber (3) of the airbag arrangement.

2. Airbag arrangement according to claim 1, **characterized in that** the initiator (23) is disposed in the dashboard (1) of the motor vehicle, and the cord-type gas generators (5) which are associated with the individual inflatable chambers (3), in their region that leads away form the initiator (23), are held together by connecting means (9) to form a common strand (8), and at the connection of each individual chamber (3), the pertaining cord-type gas generator (5) is branched off from the strand (8) and is guided into the chamber (3).

3. Airbag arrangement in the form of an airbag curtain (16) that unfolds over at least a portion of the side of the vehicle out of a module disposed in the roof beam (10) and that is comprised of a plurality of inflatable chambers (19), **characterized in that** a separate cord-type gas generator (22, 30) is associated as a gas generator with the individual chambers (19) of the airbag arrangement and is guided from a central initiator (23) in the form of a strand into the respective inflatable chamber (19) of the airbag arrangement.

4. Airbag arrangement according to claim 3, **characterized in that** the cord-type gas generators (30) which are associated with the individual inflatable chambers (19) of the airbag curtain (16), in their region that leads away from a centrally disposed initiator (23) and extends in a gas supply channel (18), are joined together by connecting means (32) to form a common strand (31), and at the connection of each individual chamber (19) to the gas supply channel (18), the pertaining cord-type gas generator (30) is branched off from the strand and is guided into the chamber (19).

5. Airbag arrangement according to claim 3, **characterized in that** disposed in the gas supply channel (18) is a cord-type gas generator (20) that extends centrally along the gas-supply channel (18), wherein further cord-type gas generator sections (22) which are connected via branching means (21), extend from the cord-type gas generator into the individual inflatable chambers (19) of the airbag curtain (16).

6. Airbag arrangement according to claim 5, **characterized in that** respective T-shaped sleeves are disposed at the branching means (21), with the two aligned legs (34) of the sleeves being placed over the central cord-type gas generator (20), and the respective cord-type gas generator sections (22) being introduced into the T-connectors (35) of the sleeves and being fixed in position in the sleeve (33).

7. Airbag arrangement according to on of the claims 4 to 6, **characterized in that** an additional cold gas generator is provided that comprises a pressure tank (24) that is provided with an opening device (27) and has a supply of gas stored therein, with such gas being released with a time delay relative to the burning off of the cord-type gas generator (20, 22).

8. Airbag arrangement according to claim 7, **characterized in that** the opening device (27) of the pressure tank (24) is activated by a time-control device.

9. Airbag arrangement according to claim 7, **characterized in that** the opening device (27) of the pressure tank (24) is connected with the unfolding airbag curtain (16) in such a way that the inflated airbag curtain (16) activates the opening device (27)

10. Airbag arrangement according to claim 9, **characterized in that** the lower free edge of the unfolding airbag curtain (16) is connected with the opening device (27) via a release cord (26).

## Revendications

1. Dispositif formant coussin à gaz pour un véhicule automobile, se présentant sous la forme d'un coussin de sécurité pour passager avant (2) comprenant plusieurs chambres (3) gonflables, **caractérisé en ce qu'**un générateur de gaz à cordeau (5) séparé, servant de générateur de gaz, est attribué aux différentes chambres (3) du dispositif formant coussin à gaz et est monté, à partir d'un initiateur (23) central, sous forme de faisceau, dans chaque chambre (3) respectivement gonflable du dispositif formant coussin à gaz.

2. Dispositif formant coussin à gaz selon la revendication 1, **caractérisé en ce que** l'initiateur (23) est disposé dans le tableau de bord (1) du véhicule automobile et **en ce que** les générateurs de gaz à cordeau (5), destinés à être attribués aux différentes chambres (3) gonflables, sont maintenus ensemble, dans leur zone partant de l'initiateur (23), par des moyens de liaison (9) pour former un faisceau (8) commun et, au niveau de la jonction avec chaque chambre (3) individuelle, le générateur de gaz à cordeau (5) qui y est associé se détache du faisceau (8) et est monté dans la chambre (3).

3. Dispositif formant coussin à gaz, se présentant sous la forme d'un rideau formant coussin à gaz (16) qui se déplie sur au moins une partie du côté du véhicule à partir d'un module disposé dans le montant du toit (10) et comprenant plusieurs chambres (19) gonflables, **caractérisé en ce qu'**un générateur de gaz à cordeau (22, 30) séparé, servant de générateur de gaz, est attribué aux différentes chambres (19) du dispositif formant coussin à gaz et est monté, à partir d'un initiateur (23) central, sous forme de faisceau, dans chaque chambre (19) respectivement gonflable du dispositif formant coussin à gaz.

4. Dispositif formant coussin à gaz selon la revendication 3, **caractérisé en ce que** les générateurs de gaz à cordeau (30) attribués aux différentes chambres (19) gonflables du rideau formant coussin à gaz (16) sont regroupés, dans leur zone partant d'un initiateur (23) disposé au centre, et s'étendant dans un canal d'alimentation en gaz (18), par des moyens de liaison (32) pour en faire un faisceau (31) commun et **en ce que**, au niveau de la jonction avec chaque chambre (19) individuelle dans le canal d'alimentation en gaz (18), le générateur de gaz à cordeau (30) qui y est associé se détache du faisceau (31) et soit monté dans la chambre (19).

5. Dispositif formant coussin à gaz selon la revendication 3, **caractérisé en ce que** dans un canal d'alimentation en gaz (18) est disposé un générateur de gaz à cordeau (20) central et s'étendant le long du canal d'alimentation en gaz (18), générateur à partir duquel d'autres parties de générateur de gaz à cordeau (22), raccordées par l'intermédiaire de ramifications (21), s'étendent dans les différentes chambres (19) gonflables du rideau formant coussin à gaz (16).

6. Dispositif formant coussin à gaz selon la revendication 5, **caractérisé en ce que** sur chacune des ramifications (21) est disposé un manchon en forme de T, qui est emmanché, par ses deux branches (34) alignées, sur le générateur de gaz à cordeau (20) central, et dans la tubulure en T (35) duquel la partie de générateur de gaz à cordeau (22) est introduite et fixée dans le manchon (33).

7. Dispositif formant coussin à gaz selon l'une des revendications 4 à 6, **caractérisé en ce qu'**est prévu un générateur de gaz froid supplémentaire comprenant un réservoir sous pression (24) pourvu d'un dispositif d'ouverture (27), avec une réserve de gaz stockée à l'intérieur, qui est libérée avec du retard par rapport à la combustion du générateur de gaz à cordeau (20, 22).

8. Dispositif formant coussin à gaz selon la revendication 7, **caractérisé en ce que** le dispositif d'ouverture (27) du réservoir sous pression (24) est activé au moyen d'un interrupteur à minuterie.

9. Dispositif formant coussin à gaz selon la revendication 7, **caractérisé en ce que** le dispositif d'ouverture (27) du réservoir sous pression (24) est relié au rideau formant coussin à gaz (16) qui se déplie de telle sorte que le rideau formant coussin à gaz (16) gonflé active le dispositif d'ouverture (27).

10. Dispositif formant coussin à gaz selon la revendication 9, **caractérisé en ce que** le bord libre inférieur (28) du rideau formant coussin à gaz (16) qui se déplie est relié au dispositif d'ouverture (27) par une corde de déclenchement (26).
